# EUROPEAN PATENT SPECIFICATION

(11) **EP 2 618 452 B1**
(45) Date of publication and mention of the grant of the patent: **19.02.2020**
(21) Application number: 13150602.4
(22) Date of filing: 09.01.2013
(51) Int. Cl.: H02J 7/00

(54) **An electronic device with source identification unit**
Elektronische Vorrichtung mit Quellenidentifizierungseinheit
Dispositif électronique à unité d'identification de source

(30) Priority: 20.01.2012 TR 201200762
(43) Date of publication of application: 24.07.2013
(73) Proprietor: Vestel Elektronik Sanayi ve Ticaret A.S., 45030 Manisa (TR)
(72) Inventor: Yatir, Mustafa Nevzat, 45030 Manisa (TR); Kirisken, Barbaros, 45030 Manisa (TR)
(74) Representative: Cayli, Hülya

(56) References cited:
- EP-A2- 0 622 265
- WO-A2-2011/154815
- JP-A- H0 382 334
- US-A- 5 420 496
- US-A1- 2007 035 287
- US-A1- 2007 220 286
- US-A1- 2010 254 162

## Description

### Technical Field

The present invention is related to the electronic devices which can be powered from different power sources and to the operation methods of such electronic devices.

### Prior Art

Electronic devices can be used in different environments. According to the environment the electronic device is used, power source of the electronic device may change. For example, for household use, an electronic device can be energised from mains plug directly or by an adaptor. On the other hand, if the device is to be used in a vehicle such as an automobile, electronic device can be energised from the DC network of the vehicle via a DC power plug. Especially in mobile devices (such as mobile televisions, mobile phones etc.), in order to reduce the number of input terminals, there is only one power input which can be connected to either an adapter (preferably a DC adapter) or a power plug of a vehicle. With said power input, electronic device can be energised from any available power source. When an electronic device is energised from a DC adapter, since DC adapter outputs almost a DC voltage constantly, electronic device works with no problem. On the other hand, when the electronic device is energised from a power plug of a vehicle, since the plug is energized from a main electrical network within the vehicle, which feeds high power components (i.e. headlights, igniters) and is also fed from a generator driven by the engine of the vehicle, electronic device may not work efficiently due to electrical instability of said electrical network which may arise from several factors such as noises generated by components connected to the network, inrush currents of the components and AC component of generator output current. Furthermore, because of said unwanted voltage peaks, inrush currents and/or noises, electronic device may be damaged due to electrical instability, for instance at the turn-on of the device. In order to prevent such inefficiency and breakdown of the electronic device, some protection methods, such as turning on the device with a predefined time delay, are used. However, said protection methods also reduce the efficiency of the electronic device. When the electronic device is energised from a DC network, such efficiency reduction is not important since the electronic device still works efficiently as compared to being used without a protection. On the other hand, when the electronic device is to be energised from an adapter, efficiency of the electronic device decreases as compared to being used without protection. Thus, in order to use electronic device efficiently in all conditions, power source of the electronic device should be detected.

In order to detect power input source of the electronic devices, various methods are used in the known art. Patent document no EP0551080A2 discloses an electronic device which can be energised from different power sources. According to this document, detection of power source is performed by comparing the voltage levels of the connected power sources. For instance, when an AC adapter is connected, input voltage is read as 0 volt and when a car battery is connected, input voltage is read as 12 V. However, in this document, a DC adapter and a battery, which both have same voltage level; can not be differentiated from each other.

Another patent document no US5506490A discloses a method and an apparatus for determining external power supply type. According to this document, type of the power supply is detected by detecting the output resistance of the power source. However, this document also does not disclose detecting different source types with same voltage level (for example a car battery with 12 V DC output and a DC adapter with 12 V output).

### Brief Description of the Invention

With the present invention, an operating method for an electronic device, which detects the type of power source, is provided. Said device comprises at least one power input (1), which can be connected to either a switch- mode DC adapter or a DC power source; at least one main board, which is powered from said power input (1); at least one filtering means (3), which filters the voltage fed through said power input (1); at least one detection means (4), which detects the high frequency components of the filtered voltage and sends signal to said main board with respect to the existence of said high frequency components. Said main board further comprises means for adjusting settings of the electronic device in relation to signal sent by said detection means.

Said method comprises the steps of claim 1.

With this operation method according to claim 1 for an electronic device, the electronic device can be used efficiently with different power sources. Furthermore, according to the detected power source of the electronic device, user settings of the electronic device can be adjusted.

### Object of the Invention

An object of the present invention is to provide an electronic device in which type of the power source is detected.

Another object of the present invention is to provide an operation method for an electronic device, which enables detection of type of power source.

Another object of the present invention is to provide an operation method for an electronic device which enables operation of said device efficiently with different type of power sources.

Another object of the present invention is to provide an electronic device, in which settings of said device to be loaded automatically according to the type of the detected power source.

Another object of the present invention is to provide an operation method for an electronic device, which enables settings of said device to be loaded automatically according to the type of the detected power source.

### Description of the Drawings

**Figure 1** shows a block diagram of the electronic device of the present invention.
**Figure 2** shows flowchart of the operation method of the electronic device of the present invention.
**Figure 3** shows voltage-frequency graph of filtered output of a switch- mode DC adapter.
**Figure 4** shows voltage-frequency graph of filtered output of a battery.

The reference numbers as used in figures may possess the following meanings;

| | |
|---|---|
| Power input | (1) |
| Main board | (2) |
| Filtering means | (3) |
| Detection means | (4) |
| Powering | (101) |
| Filtering | (102) |
| Analyse voltage | (103) |
| Check high frequency components | (104) |
| Adjust settings in accordance with switch- mode DC adapter settings | (105) |
| Adjust settings in accordance with DC source settings | (106) |

### Detailed Description of the Invention

Electronic devices, especially mobile devices, can be used in different environments and due to availability in the environment, they can be powered from different power sources. In order to use said electronic device with different power sources efficiently, protection settings of the electronic device should be adjusted according to power source. Thus, with the present invention, an electronic device which detects type of power source and working method of said device is provided.

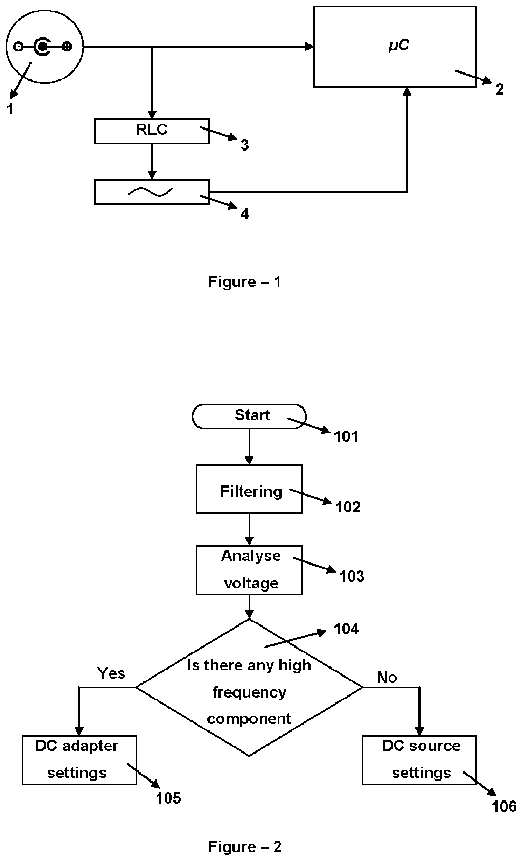

Figure 1 shows a block diagram of the electronic device of the present invention. Said electronic device comprises at least one power input (1), which can be connected to either a switch- mode DC adapter or a DC power source; at least one main board (2), which is powered from said power input (1); at least one filtering means (3), which filters the voltage fed through said power input (1) to remove the DC component of said voltage; and at least one detection means (4), which detects the high frequency components of the filtered voltage, which is higher than a predetermined frequency, and sends signal to said main board (2) with respect to the existence of said high frequency components. Furthermore, said main board (2) comprises means for adjusting at least one setting of the electronic device in relation to signal sent by said detection means (4). Said filtering means (3) may comprise at least one band pass filter.

A flow chart of the operation method of electronic device of the present invention is given in figure 2. According to said method, when the electronic device is powered (101) (for example when the device is connected to a power source or when a power button of the electronic device is depressed, powering on the device), input voltage fed through said power input (1) is filtered by filtering means (3) (102). In the detection means (4), voltage and frequency characteristic of the filtered voltage is analysed (103). Then, it is checked whether analysed voltage contains any high frequency component whose frequency is higher than a threshold frequency (104). Said threshold frequency can be a predetermined frequency, which is determined by manufacturer, or said frequency can be determined by the user. If there is at least one high frequency component, the power source is identified as a switch- mode DC adapter and electronic device settings are adjusted in accordance with requirements of a switch- mode DC adapter (105). If no high frequency component is detected, the power source is identified as a DC source and electronic device settings are adjusted in accordance with requirements of a DC source (106).

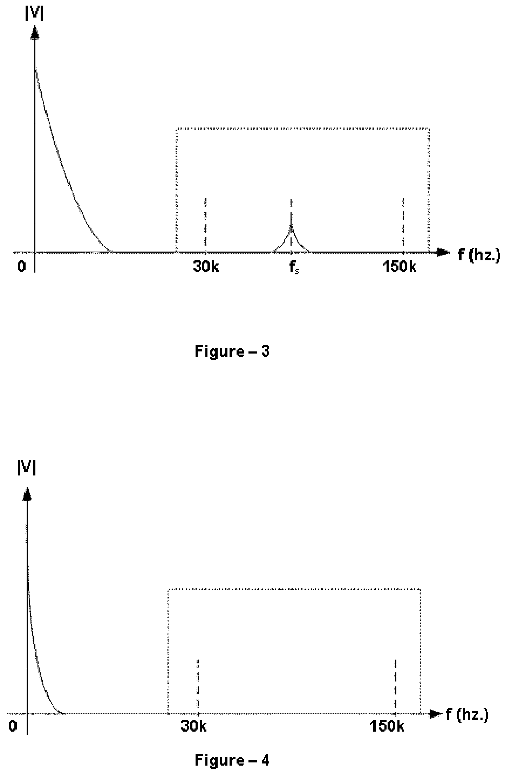

Modern DC adapters, which generally use switch mode topologies, generate DC output voltage which has almost a constant voltage level. However, this output voltage contains high frequency components with small amplitudes, which arise due to switching manner of the supply. Although these components are negligible when compared to DC component of the output voltage, when the output voltage is filtered to remove DC component of the output voltage, said components can be detected. As given in figure 3, when the output of a switch- mode DC adapter is filtered with a band pass filter, due to switching nature of the adapter, a high frequency component can be seen. This component can be detected by said detection means (4). On the other hand, a battery supplies an output with no continuous high frequency components. As given in figure 4, when the output of a battery is filtered, no high frequency components is detected. In the present invention, by detecting said high frequency, type of the power source is detected.
In a preferred embodiment of the present invention, said means for adjusting settings of the electronic device comprises at least one protection circuit, which blocks the noises of the input voltage. Said protection circuit can be a low pass filter, voltage and/or current snubber or any voltage limiting circuit. In another embodiment of the present invention, device may further comprise means for by-passing (disabling) said protection circuit in accordance with detected power source.

In a preferred embodiment of the present invention, when the electronic device settings are adjusted in accordance with a DC power source usage (106), a protection method against the unwanted voltage peaks, inrush currents and/or noises of the power input is performed. In said protection method, electronic device turn on may be delayed. For example, when the electronic device is a television, sound and display may be outputted with a predefined delay in order to provide a better quality. On the other hand, when the electronic device settings are adjusted in accordance with a switch- mode DC adapter (105), electronic device is started without a protection method. In other words, electronic device is started with best quality settings (and preferably without delay). Thus, according to the present invention, electronic device is used with most efficient settings for different types of power sources.

In another preferred embodiment of the present invention, said electronic device is a mobile television which is suitable for household use with a switch- mode DC adapter and in a vehicle powered via DC power source. In this embodiment, when the mobile television settings are adjusted in accordance with a switch- mode DC adapter (105), user settings (such as display and sound settings) of the mobile television are adjusted according to home environment (for example contrast of display and sound are adjusted to a high level). Similarly, when the mobile television settings are adjusted in accordance with a DC power source (106), user settings of the mobile television are adjusted in accordance with the environment of the vehicle (i.e. contrast of display and sound are adjusted to a low level). In this embodiment, environment settings can be determined by user or can be predefined by the manufacturer.

In the present invention, after the step of checking high frequency components (104), if at least one high frequency component is detected, it is checked that whether detected component exist for a predetermined time or not. If detected component exists for a predetermined time (i.e. said component is continuous), then the power source is identified as a switch- mode DC adapter and electronic device settings are adjusted accordingly (105). If said component does not exist for said predetermined time, the power source is identified as a DC source and electronic device settings are adjusted in accordance with requirements of a DC source (106). With this additional step, in a DC network when a noise with high frequency occurs, identifying the power source as DC adapter erroneously is prevented, since said noise is not continuous with a constant frequency. Said predetermined time may be determined by manufacturer or by the user.

With the electronic device and operation method of the present invention, electronic device can be used efficiently with different power sources. Furthermore, according to the detected power source of the electronic device, user settings of the electronic device can be adjusted.

## Claims

1. An operation method for an electronic device comprising at least one power input (1), which can be connected to either a switch- mode DC adapter or a DC power source, and at least one main board (2), which is powered from said power input (1) **characterized in that** said method comprises the steps of;
- powering said electronic device (101);
- filtering input voltage fed through said power input (1) by at least one filtering means (3) (102);
- analyzing voltage and frequency characteristic of the filtered voltage in at least one detection means (4) (103);
- checking whether analysed voltage contains any high frequency component whose frequency is higher than a threshold frequency (104);
- after the checking high frequency components step (104), if at least one high frequency component is detected following steps are performed:
i. checking whether detected component exist for a predetermined time or not;
ii. if detected component exists for a predetermined time, identifying the power source as a switch-mode DC adapter and adjusting electronic device settings in accordance with requirements of a switch- mode DC adapter (105);
iii. if detected component does not exist for said predetermined time, identifying the power source as a DC source and adjusting electronic device settings in accordance with requirements of a DC source (106);
wherein the step of adjusting electronic device settings in accordance with requirements of a DC source (106) further comprises the step of performing a protection method against unwanted voltage peaks, inrush currents and/or noises of the power input, and
wherein in the adjusting electronic device settings in accordance with requirements of a switch-mode DC adapter (105) step, the electronic device is started without a protection method.

2. An operation method according to claim 1 **characterized in that;** said threshold frequency is a predetermined frequency.

3. An operation method according to claim 2 **characterized in that;** said predetermined frequency is determined by manufacturer.

4. An operation method according to claim 2 **characterized in that;** said predetermined frequency is determined by the user.

5. An operation method according to claim 1 **characterized in that;** the step of performing protection method comprises the step of delaying turning on of the electronic device.

6. An operation method according to claim 1 **characterized in that;** step of adjusting electronic device settings in accordance with requirements of a switch-mode DC adapter (105) and step of adjusting electronic device settings in accordance with requirements of a DC source (106) further comprise the step of adjusting user settings of the electronic device according to the identified power source.

## Patentansprüche

1. Betriebsverfahren für eine elektronische Vorrichtung, die wenigstens einen Leistungseingang (1), der entweder mit einem Schaltnetzteil-Gleichstromadapter oder einer Gleichstromquelle verbunden werden kann, und wenigstens eine Hauptplatine (2) aufweist, die mit Leistung von dem Leistungseingang (1) versorgt wird, **dadurch gekennzeichnet, dass** das Verfahren die Schritte beinhaltet,
- die elektronische Vorrichtung (101) mit Leistung zu versorgen,
- die Eingangsspannung, die durch Leistungseingang (1) zugeführt wird, mit wenigstens einer Filtereinrichtung (3) zu filtern (102),
- Spannungs- und Frequenzcharakteristik der gefilterten Spannung mit wenigstens einer Detektoreinrichtung (4) zu analysieren (103),
- zu prüfen (104), ob die analysierte Spannung irgendeine Hochfrequenzkomponente enthält, deren Frequenz höher als eine Schwellenfrequenz ist,
- nach dem Prüfschritt auf Hochfrequenzkomponenten (104), falls wenigstens eine Hochfrequenzkomponente detektiert worden ist, folgende Schritte auszuführen:
i. Prüfen, ob die detektierte Komponente für eine vorgegebene Zeitdauer vorhanden ist oder nicht,
ii. falls die detektierte Komponente für eine vorgegebene Zeitdauer vorhanden ist, Identifizieren der Leistungsquelle als Schaltnetzteil-Gleichstromadapter und Einstellen von Einstellungen der elektronischen Vorrichtung gemäß den Erfordernissen eines Schaltnetzteil-Gleichstromadapters (105),
iii. falls die detektierte Komponente nicht für die vorgegebene Zeitdauer vorhanden ist, Identifizieren der Leistungsquelle als Gleichstromquelle und Einstellen der Einstellungen der elektronischen Vorrichtung gemäß den Erfordernissen einer Gleichstromquelle (106),
wobei der Schritt des Einstellens der Einstellungen der elektronischen Vorrichtung gemäß den Erfordernissen einer Gleichstromquelle (106) weiter den Schritt beinhaltet, ein Schutzverfahren gegen ungewollte Spannungsspitzen, Einschaltstromstöße und/oder Rauschen des Leistungseingangs durchzuführen, und
wobei bei dem Schritt (105) des Einstellens der Einstellungen der elektronischen Vorrichtung gemäß Erfordernissen eines Schaltnetzteil-Gleichstromadapters die elektronische Vorrichtung ohne ein Schutzverfahren gestartet wird.

2. Betriebsverfahren nach Anspruch 1, **dadurch gekennzeichnet, dass** die Schwellenfrequenz eine vorab bestimmte Frequenz ist.

3. Betriebsverfahren nach Anspruch 2, **dadurch gekennzeichnet, dass** die vorab bestimmte Frequenz durch einen Hersteller bestimmt ist.

4. Betriebsverfahren nach Anspruch 2, **dadurch gekennzeichnet, dass** die vorab bestimmte Frequenz durch den Benutzer bestimmt ist.

5. Betriebsverfahren nach Anspruch 1, **dadurch gekennzeichnet, dass** der Schritt der Durchführung des Schutzverfahrens den Schritt beinhaltet, das Einschalten der elektronischen Vorrichtung zu verzögern.

6. Betriebsverfahren nach Anspruch 1, **dadurch gekennzeichnet, dass** der Schritt des Einstellens der Einstellungen der elektronischen Vorrichtung gemäß den Erfordernissen eines Schaltnetzteil-Gleichstromadapters (105) und der Schritt des Einstellens der Einstellungen der elektronischen Vorrichtung gemäß Erfordernissen einer Gleichstromquelle (106) weiterhin den Schritt beinhalten, Benutzereinstellungen der elektronischen Vorrichtung nach Maßgabe der identifizierten Leistungsquelle einzustellen.

## Revendications

1. Procédé de fonctionnement pour un dispositif électronique, comprenant au moins une entrée d'alimentation (1) qui peut être connectée à un adaptateur CC en mode de commutation ou à une source d'alimentation CC, et au moins une carte mère (2) qui est alimentée par ladite entrée d'alimentation (1), **caractérisé en ce que** ledit procédé comprend les étapes consistant à :
- alimenter ledit dispositif électronique (101) ;
- filtrer une tension d'entrée alimentée à travers ladite entrée d'alimentation (1) par au moins un moyen de filtrage (3) (102) ;
- analyser la tension et la fréquence caractéristique de la tension filtrée dans au moins un moyen de détection (4) (103) ;
- vérifier si la tension analysée contient ou non une composante de fréquence élevée dont la fréquence est supérieure à une fréquence de seuil (104) ;
- après l'étape de vérification de composante de fréquence élevée (104), si au moins une composante de fréquence élevée est détectée, effectuer les étapes suivantes consistant à :
i. vérifier si une composante détectée existe ou non pendant un temps prédéterminé ;
ii. si une composante détectée existe pendant un temps prédéterminé, identifier la source d'alimentation en tant qu'adaptateur CC en mode de commutation et ajuster des réglages de dispositif électronique conformément aux exigences d'un adaptateur CC en mode de commutation (105) ;
iii. si la composante détectée n'existe pas pendant ledit temps prédéterminé, identifier la source d'alimentation comme source CC et ajuster des réglages de dispositif électronique conformément à des exigences d'une source CC (106);
dans lequel l'étape d'ajustement de réglages de dispositif électronique conformément à des exigences d'une source CC (106) comprend en outre l'étape de réalisation d'un procédé de protection à l'égard de pics de tension, de courants de démarrage et/ou de bruits non souhaités de l'entrée d'alimentation, et
dans lequel, dans l'étape d'ajustement de réglages de dispositif électronique conformément aux exigences d'un adaptateur CC en mode de commutation (105), le dispositif électronique est démarré sans un procédé de protection.

2. Procédé de fonctionnement selon la revendication 1, **caractérisé en ce que** ladite fréquence de seuil est une fréquence prédéterminée.

3. Procédé de fonctionnement selon la revendication 2, **caractérisé en ce que** ladite fréquence prédéterminée est déterminée par le fabricant.

4. Procédé de fonctionnement selon la revendication 2, **caractérisé en ce que** ladite fréquence prédéterminée est déterminée par l'utilisateur.

5. Procédé de fonctionnement selon la revendication 1, **caractérisé en ce que** l'étape de réalisation d'un procédé de protection comprend l'étape de retardement de la mise en marche du dispositif électronique.

6. Procédé de fonctionnement selon la revendication 1, **caractérisé en ce que** l'étape d'ajustement de réglages de dispositif électronique conformément à des exigences d'un adaptateur CC en mode de commutation (105) et l'étape d'ajustement de réglages de dispositif électronique conformément à des exigences d'une source CC (106) comprennent en outre l'étape d'ajustement de réglages du dispositif électronique par l'utilisateur conformément à la source d'alimentation identifiée.
